# EUROPÄISCHE PATENTSCHRIFT

(11) **EP 1 493 718 B1**
(45) Veröffentlichungstag und Bekanntmachung des Hinweises auf die Patenterteilung: **13.12.2006**
(21) Anmeldenummer: 04014563.3
(22) Anmeldetag: 22.06.2004
(51) Int. Cl.: C03B 29/08, C03B 29/12

(54) **Anlage und Verfahren zur Wärmebehandlung von Glas**
Installation and process for tempering of glass
Installation et procédé pour la trempe du verre

(30) Priorität: 03.07.2003 DE 10330196
(43) Veröffentlichungstag der Anmeldung: 05.01.2005
(73) Patentinhaber: Edmund Erdmann GmbH & Co. KG, 45472 Mülheim an der Ruhr (DE)
(72) Erfinder:
(74) Vertreter: Gesthuysen, von Rohr & Eggert

(56) Entgegenhaltungen:
- EP-A- 0 937 687
- WO-A-01/32570
- WO-A-95/04708
- US-A- 4 059 426
- US-A- 4 617 043
- US-A- 5 110 338

## Beschreibung

Die vorliegende Erfindung betrifft eine Anlage zur Wärmebehandlung von Glas gemäß dem Oberbegriff des Anspruchs 1 sowie ein Verfahren zur Wärmebehandlung von Glas mit einer solchen Anlage.

Bei der Wärmebehandlung von Glas, insbesondere in einer sogenannten Vorspannanlage oder einem Temperofen, sind üblicherweise Heizstrahler vorgesehen, um das Glas zu erwärmen. Die Wärmeeinkopplung erfolgt zumindest zu einem großen Teil über Wärmestrahlung.

Die Lehre der vorliegenden Erfindung ist primär auf die Wärmebehandlung von Glas gerichtet. Grundsätzlich sind technisch ähnliche Probleme aber auch bei anderen mit hohen Temperaturen zu behandelnden Werkstoffen zu beobachten, so daß sich im Grundsatz die Lehre der vorliegenden Erfindung auch auf Anlagen und Verfahren zur Wärmebehandlung von anderen mit hohen Temperaturen zu behandelnden Werkstoffen, beispielsweise von Aluminiumblech, beziehen soll. Im übrigen gilt, daß das Glas, das im Rahmen der Lehre der Erfindung einer Wärmebehandlung unterzogen werden soll, im Normalfall Flachglas, also plattenförmiges Glas ist.

Insbesondere bei sogenanntem Low-E-Glas (coated glass) - Glas mit geringer Emission, üblicherweise durch eine reflektierende Beschichtung - besteht das Problem, daß eine gegenüber normalem Glas wesentlich geringere Wärmeeinkopplung durch Wärmestrahlung möglich ist. Alternativ oder zusätzlich ist daher eine Wärmeübertragung durch Konvektion vorgesehen, wobei ein warmer oder heißer Luftstrom zur Verbesserung des Wärmeaustauschs auf das Glas gerichtet oder daran vorbeigeführt wird.

Ein ähnliches Problem, besonders relevant wieder bei Low-E-Glas, besteht in der sogenannten Schüsselbildung beim Einlaufen von Flachglas in eine solche Anlage. Das noch kalte, einlaufende Glas rollt auf Keramikrollen einer Fördereinrichtung, die selbst die Temperatur der Wärmekammer haben, also etwa die Temperatur von 700 °C. Der Wärmeübergang von den Rollen auf die Unterseite des Glases ist sehr intensiv, die Wärmeleitung des Glases aufgrund der noch geringen Temperatur jedoch noch gering. Die Wärmestrahlung von der Oberseite her ist weniger wirkungsvoll, insbesondere bei Low-E-Glas, so daß die Glasplatte in der Wärmekammer die Tendenz hat sich schüsselartig zu wölben. Das ist natürlich besonders stark bei Low-E-Glas, bei dem sich die reflektierende Beschichtung natürlich auf der nicht mit den Rollen in Kontakt kommenden Oberseite befindet, um Schäden an der Beschichtung zu vermeiden.

Die US 4,059,426 A, die den Ausgangspunkt der vorliegenden Erfindung bildet, offenbart eine Anlage zur Wärmebehandlung von Glas. Gemäß einer Ausführungsvariante wird komprimierte Luft in eine Wärmekammer eingeblasen, und zwar mittels vertikal oberhalb des Glases angeordneter Gasstrahlpumpen. Die komprimierte Luft wird in die Gasstrahlpumpe tangential eingeleitet, die basierend auf dem Coanda-Effekt eine Förderung der in der Wärmekammer befindlichen Warmluft durch einen sich konisch erweiternden Diffusor bewirkt.

Der gesamte durch eine Gasstrahlpumpe strömende Volumenstrom ist um einen Volumenfaktor von 10 bis 20 größer als der Volumenstrom der zugeführten Gebläseluft. Um die erforderliche starke Umwälzung der Luft in der Wärmekammer zu erreichen, muß bei dem genannten Volumenfaktor ein verhältnismäßig großer Volumenstrom an Gebläseluft zugeführt werden. Um eine übermäßige Abkühlung der Luft in der Wärmekammer durch die zugeführte Gebläseluft zu verhindern, wird die Gebläseluft vorgewärmt.

Die EP 0 058 529 A1 offenbart eine ähnliche Anlage zur Wärmebehandlung von Glas. Im Gegensatz zu den vorgenannten Gasstrahlpumpen sind hier offene Düsen in Reihen quer zur Förderrichtung des Glases angeordnet, um Gebläseluft von oben und unten auf die Glasoberfläche zu richten. Das Glas wird in der Wärmekammer auf Rollen gefördert.

Die in der WO 95/04708 A1 und in der US 5,368,624 A beschriebenen Anlagen zur Wärmebehandlung weisen ebenfalls Gasstrahlpumpen für die gesteuerte Förderung von Luft auf. Diese Gasstrahlpumpen sind allerdings ausschließlich für die Kühlung des zu behandelnden Glases vorgesehen.

Eine weitere bekannte Anlage zur Wärmebehandlung (WO 00/37371) zeigt schließlich eine Heizeinrichtung zur Strahlungsheizung unterhalb des zu behandelnden Glases und mehrere Heißgasdüsen oberhalb des zu behandelnden Glases zur Wärmeübertragung durch Konvektion. Dabei dienen die Heißgasdüsen ausschließlich der Förderung von Gebläseluft. Nachteilig bei dieser Konzeption ist die Gefahr der punktuellen Erhitzung des zu behandelnden Glases.

Der vorliegenden Erfindung liegt das Problem zugrunde, eine Anlage und ein Verfahren zur Wärmebehandlung von Glas anzugeben, wobei der erforderliche Volumenstrom an Gebläseluft verringert wird, insbesondere so, daß nicht vorgewärmte Gebläseluft ohne übermäßige Abkühlung der Luft in der Wärmekammer zugeführt werden kann und/oder die Konvektion verbessert wird.

Die obige Aufgabe wird durch eine Anlage gemäß Anspruch 1 gelöst. Vorteilhafte Weiterbildungen sind Gegenstand der Unteransprüche. Hier und im folgenden wird die Erfindung immer nur für das bevorzugte Material Glas, insbesondere plattenförmiges Glas, erläutert. Dies soll den Schutzumfang jedoch nicht beschränken. Vielmehr ist immer mit zu berücksichtigen, daß auch andere, vorzugsweise plattenförmige, vorzugsweise mit hohen Temperaturen zu behandelnde Werkstoffe hier im Blick sind, insbesondere Aluminiumblech.

Ein wesentlicher Aspekt der vorliegenden Erfindung liegt darin, daß die Gasstrahlpumpen jeweils eine Mischstrecke mit konstantem lichtem Durchmesser oder Querschnitt aufweisen. So wird eine effiziente Konvektion ermöglicht, wobei deutlich weniger Gebläseluft als beim Stand der Technik erforderlich ist. Insbesondere ist es dabei möglich, die Gebläseluft ohne Vorwärmung direkt einzuleiten.

Auch dann, wenn im folgenden die Begriffe "Luft", "Gebläseluft", "Kammerluft" verwendet werden, soll darunter stets ein, beliebiges Gas oder Gasgemisch verstanden werden. Allerdings ist Umgebungsluft insoweit natürlich erste Wahl. Häufig wird der Umgebungsluft aber ein Gas beigemischt, um besondere Effekte in der heißen Wärmekammer zu erreichen. Insbesondere kann die Anlage auch mit Schutzgas arbeiten und in der Wärmekammer eine Schutzgasatmosphäre vorgesehen sein.

In der Tat ist es von besonderer Bedeutung, daß im Betrieb den Gasstrahlpumpen nicht vorgewärmte Gebläseluft zugeführt wird, was insbesondere bedeutet, daß die Anlage eine Vorwärmung für die Gebläseluft nicht aufweist, jedenfalls nicht aufweisen muß. Erfindungsgemäß ist erkannt worden, daß der Massenstrom nicht vorgewärmter Gebläseluft aufgrund der höheren Dichte der Gebläseluft höher ist und dadurch eine verbesserte Beschleunigung der Kammerluft in der Mischstrecke der Gasstrahlpumpen stattfindet. Entgegen allen Erwartungen wird der Wirkungsgrad für die Konvektion mit der erfindungsgemäßen Anlage also höher, nicht niedriger.

Die Randbedingungen für die erfindungsgemäße Anlage bei der Erfassung der Anlagenparameter, insbesondere der Betriebsparameter, werden mit Umgebungstemperatur in der Anlage vorgegeben. Die Arbeitstemperaturen mit beispielsweise 700 °C in der Wärmekammer sind zu extrem für entsprechende Messungen. Auf der Grundlage der gemessenen Werte für Umgebungstemperatur in der Anlage verbessern sich die Verhältnisse bei Betriebstemperatur der Anlage weiter, da eben die Temperaturdifferenz zwischen der Gebläseluft und der Kammerluft so groß wird, daß etwa eine Verdreifachung des Volumenstroms bzw. des Volumenfaktors auftritt. Diese führt zu etwa einer Verdreifachung der Geschwindigkeit der am Austritt der Mischstrecke der Gasstrahlpumpen auftretenden Luftströmung.

Ein weiterer Aspekt der vorliegenden Erfindung liegt darin, daß von den Gasstrahlpumpen erzeugte Luftwirbel jeweils mindestens eine Heizeinrichtung in der Wärmekammer streifen oder umströmen. Dies ist wiederum einer effizienten Konvektion zuträglich, so daß insbesondere eine Verringerung der Betriebskosten ermöglicht wird.

Die Erfindung betrifft auch ein Verfahren gemäß Anspruch 30.

Weitere Vorteile, Merkmale, Eigenschaften und Aspekte der vorliegenden Erfindung ergeben sich aus der folgenden Beschreibung bevorzugter Ausführungsformen anhand der Zeichnung. Es zeigt:
- Fig. 1: einen schematischen Längsschnitt einer vorschlagsgemäßen Anlage zur Wärmebehandlung von Glas;
- Fig. 2: einen schematischen, teilweisen Querschnitt der Anlage gemäß Fig. 1;
- Fig. 3: einen schematischen Längsschnitt einer Gasstrahlpumpe der Anlage in einer ersten Ausführungsform; und
- Fig. 4: eine schematische Ansicht einer Gasstrahlpumpe der Anlage in einer weiteren Ausführungsform.

In den Figuren werden für gleiche oder ähnliche Teile die selben Bezugzeichen verwendet, wobei entsprechende oder vergleichbare Vorteile und Eigenschaften erreicht werden, auch wenn eine wiederholte Beschreibung aus Vereinfachungsgründen weggelassen ist.

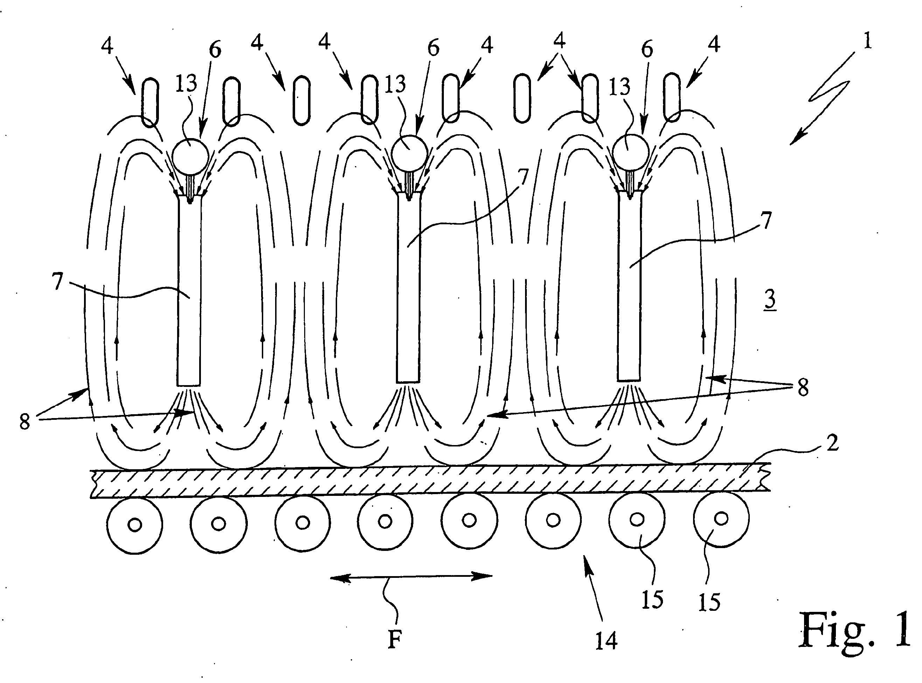

Fig. 1 zeigt einen schematischen, ausschnittsweisen Längsschnitt einer vorschlagsgemäßen Anlage 1 zur Wärmebehandlung von Glas 2.

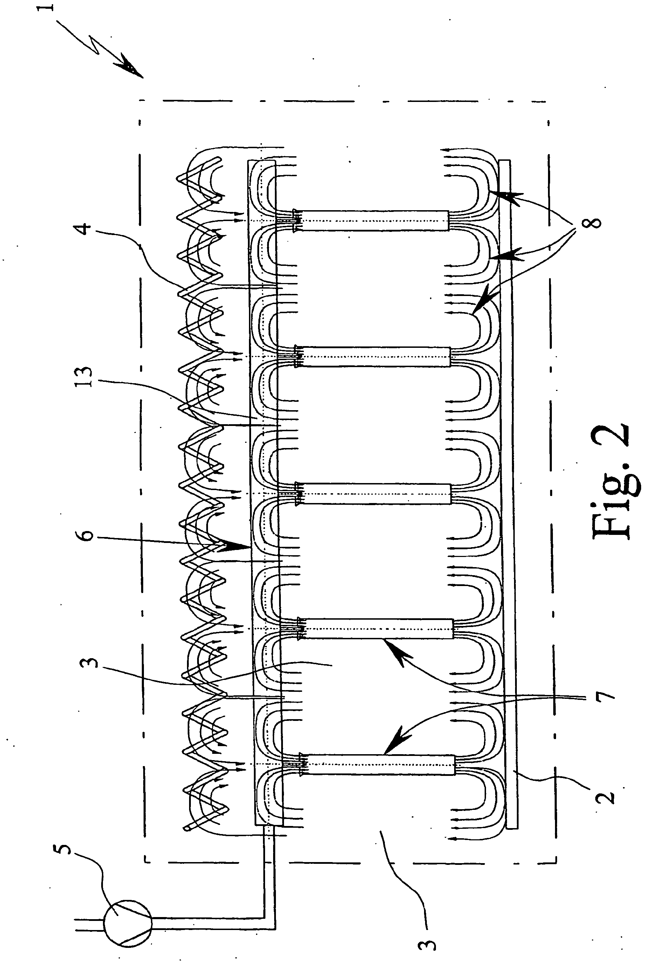

Fig. 2 zeigt die Anlage 1 in einer teilweisen Schnittdarstellung, quer zum Schnitt gemäß Fig. 1. In Fig. 2 ist strichpunktiert ein Gehäuse der Anlage 1 angedeutet, das in Fig. 1 aus Vereinfachungsgründen weggelassen ist.

Die Anlage 1 weist eine Wärmekammer 3, mehrere Heizeinrichtungen 4, ein Gebläse 5 (nur in Fig. 2 angedeutet) und eine daran angeschlossene Leiteinrichtung 6 zur Zuführung von Gebläseluft in die Wärmekammer 3 auf. Der Begriff "Gebläse" ist hier vorzugsweise im Sinne eines Kompressors zu verstehen.

Die Leiteinrichtung 6 weist ihrerseits mehrere Gasstrahlpumpen 7 auf, denen eingangsseitig Gebläseluft zuführbar ist. Die Gasstrahlpumpen 7 dienen der Erzeugung von Luftwirbeln 8 in der Wärmekammer 3, wie in Fig. 1 und 2 angedeutet. Die Luftwirbel 8 sind auf das Glas 2 gerichtet bzw. streifen dieses, um das Glas 2 durch Konvektion zu wärmen oder zumindest einen guten Wärmeaustausch zwischen der Luft und dem Glas 2 zu bewirken. Grundsätzlich gilt natürlich, daß ein großer Anteil, häufig noch der größte Anteil der Wärmemenge auf das Glas 2 durch die vorhandene Strahlungsheizung übertragen wird.

Der Begriff "Luftwirbel" soll im übrigen nicht auf eine turbulente Strömung hinweisen, sondern durchaus eine überwiegend laminare Strömung abdecken, die jedoch kreislaufartig bewirkt wird und so am Glas 2 eine vergleichsweise hohe Strömungsgeschwindigkeit hat, beispielsweise eine Strömungsgeschwindigkeit von etwa 10 ms. Dabei ist zu berücksichtigen, daß die Betriebstemperatur in einer solchen Wärmekammer 3 bei um die 700 °C liegt.

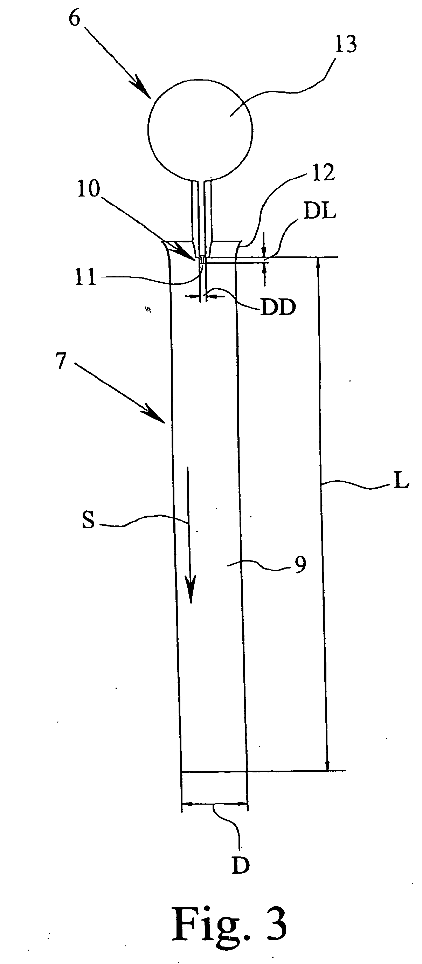

Fig. 3 zeigt in einer schematischen Schnittdarstellung eine Gasstrahlpumpe 7, anhand dessen der bevorzugte Aufbau der Gasstrahlpumpe 7 nachfolgend erläutert wird.

Die Gasstrahlpumpe 7 weist eine Mischstrecke 9 zur Förderung von Kammerluft durch einströmende Gebläseluft und zur Vermischung von Kammerluft und Gebläseluft auf. Die Mischstrecke 9 ist durch ein entsprechend geformtes, vorzugsweise rohrförmiges, insbesondere zylindrisches Bauteil gebildet bzw. begrenzt.

Wie in Fig. 3 angedeutet, weist die Mischstrecke 9 einen konstanten lichten Durchmesser D oder Querschnitt auf. Versuche haben gezeigt, daß so bei verhältnismäßig geringem Gebläseluftstrom ein großer Volumenstrom an insgesamt durch die Gasstrahlpumpe 7 strömender Luft erreichbar ist. Es darf darauf hingewiesen werden, daß die Angabe des konstanten lichten Durchmessers D oder Querschnitts vor dem Hintergrund möglicher Fertigungstoleranzen oder nicht spürbarer Abweichungen zu verstehen ist. In diesem Sinne ist jedenfalls zu fordern, daß die Mischstrecke 9 einen zumindest im wesentlichen konstanten lichten Durchmesser D oder Querschnitt aufweist.

Vorzugsweise weist die Gasstrahlpumpe 7 oder zumindest der Mischstrecke 9 ein Verhältnis von Länge L zu lichtem Durchmesser D von mindestens 4, insbesondere mindestens 5, ganz bevorzugt im wesentlichen von 8 oder mehr und/oder von höchstens 20, vorzugsweise weniger als 15, insbesondere weniger als 10, auf. Die Länge der Mischstrecke 9 im Verhältnis zum Durchmesser wird von einander entgegengesetzten Anforderungen bestimmt. Ist die Mischstrecke zu kurz, so ergibt sich keine homogene Geschwindigkeitsverteilung im aus der Mischstrecke 9 austretenden Luftstrom. Ist die Mischstrecke 9 zu lang, jedenfalls im Verhältnis zum Durchmesser, so ist die Strömungsreibung an der Wandung der Mischstrecke 9 zu groß und der Wirkungsgrad der Mischstrecke 9 sinkt. Die angegebenen Verhältnisse treffen die durch Versuche ermittelte Optimierung.

Die Länge L der Gasstrahlpumpe 7 oder der Mischstrecke 9 beträgt vorzugsweise mindestens 15 cm, besonders bevorzugt mindestens 18 cm, insbesondere im wesentlichen 20 cm oder mehr. Der Durchmesser D beträgt vorzugsweise mindestens 10 mm, besonders bevorzugt mindestens 20 mm, insbesondere im wesentlichen 25 mm oder mehr.

Die Gebläseluft ist der Gasstrahlpumpe 7 bzw. der Mischstrecke 9 vorzugsweise zentrisch und insbesondere koaxial zur Längserstreckung der Mischstrecke 9 zuführbar. Hierzu ist der Gasstrahlpumpe 7 bzw. der Mischstrecke 9 eingangsseitig eine Düse 10 zugeordnet, die vorzugsweise zentrisch angeordnet ist.

Die Düse 10 weist eine Öffnung 11 mit einer Länge DL von 1 bis 12 mm, vorzugsweise im wesentlichen 3 bis 5 mm, auf. Die Öffnung 11 weist vorzugsweise einen Durchmesser DD von höchstens 2 mm, insbesondere von im wesentlichen 1 mm auf. Optimal ist ein Verhältnis DL / DD von zumindest 3 bis höchstens 5. Dabei ist zu berücksichtigen, daß die Geschwindigkeit der Gebläseluft in der Öffnung 11 der Düse 10 nahe an der Schallgeschwindigkeit liegt. Daher sollte dieser Abschnitt so kurz wie möglich sein, aber auch die notwendige Beschleunigung erbringen.

Die Öffnung 11 ist so bemessen, daß ein verhältnismäßig geringer Gebläsestrom der zugeordneten Gasstrahlpumpe 7 bzw. der zugeordneten Mischstrecke 9 zugeleitet wird. Jedoch ist die Öffnung 11 im Durchmesser DD so gewählt, daß ein Verzundern der Düsenöffnung 11 vermieden wird. Unter Verzundern ist in diesem Zusammenhang nicht nur ein unmittelbares Verzundern der Düsenöffnung 11 selbst zu verstehen, sondern auch ein Verstopfen der Düsenöffnung 11 durch anderweit anfallenden Zunder. Dementsprechend wird man mit zunderarmen Werkstoffen bei der Herstellung insbesondere der Düse 10 arbeiten, jedenfalls Werkstoffe verwenden, die zu feinkörnigem Zunder führen, der die Düsenöffnung 11 möglichst nicht verstopft.

Die Gasstrahlpumpe 7 weist beim Darstellungsbeispiel einen Konfusor 12 auf. Eine normale, aus dem Stand der Technik bekannte Gasstrahlpumpe weist auf einen Konfusor, eine kurze Mischstrecke und einen Diffuser. Auch für die erfindungsgemäße Anlage hat sich für die Gasstrahlpumpe 7 das Vorhandensein eines Konfusors 12 als zweckmäßig erwiesen. Der Wirkungsgrad wird dadurch optimiert. Allerdings muß der Konfuser 12 nicht sehr lang sein. Wichtig ist allerdings, daß die Austrittsöffnung der Düse 10, gemessen bei Umgebungstemperatur in der Anlage 1, etwa in Höhe des Übergangs von der Mischstrecke 9 auf den Konfusor 12 liegt. Angesichts der vorgegebenen Temperaturdifferenzen kann man die Lage nicht ganz genau vorherbestimmen. Die Anordnung der Düse 10 in diesem Bereich ist aber für den Wirkungsgrad, wie Versuche gezeigt haben, von beachtlicher Bedeutung.

Grundsätzlich ist der Betrieb der erfindungsgemäßen Anlage auch ohne Konfusoren an den Gasstrahlpumpen 7 möglich, der Wirkungsgrad ist dann aber deutlich geringer.

Der vorgesehene Konfusor 12 weist vorzugsweise ein Verhältnis von Einlaßdurchmesser zu Auslaßdurchmesser von höchstens 1,5 oder weniger und/oder eine Länge von maximal 5 %, vorzugsweise maximal 4 % und insbesondere im wesentlichen 3 % oder weniger der Länge L der nachgeordneten Mischstrecke 9 auf. Vorzugsweise ist der Konfusor 12 einstückig mit der Mischstrecke 9 bzw. dem rohrförmigen Bauteil, das die Mischstrecke 9 bildet, ausgebildet.

Die Düse 10 ragt vorzugsweise in die Mischstrecke 9 oder zumindest in den Konfusor 12 hinein, um eine möglichst gleichmäßige, vorzugsweise wenig turbulente Strömung in der Mischstrecke 9 zu erreichen und dadurch den insgesamt durch die Gasstrahlpumpe 7 strömenden Luftstrom zu maximieren.

Die Gasstrahlpumpe 7 weist vorzugsweise keinen Diffusor auf. Dies ist ein erheblicher Unterschied zu den aus dem Stand der Technik bekannten Gasstrahlpumpen, die einen Diffusor als zwingend notwendig angesehen haben.

Die Düse 10 wird vorzugsweise mit Gebläseluft mit einem Druck von etwa 100 kPa beaufschlagt. Der Gebläseluftstrom pro Gasstrahlpumpe 7 beträgt vorzugsweise höchstens 2 m³/h, vorzugsweise weniger als 1,5 m³/h und insbesondere im wesentlichen 1,0 m³/h oder weniger. Vorzugsweise wird jeder Gasstrahlpumpe 7 bzw. jeder Mischstrecke 9 ein Gebläseluftstrom von etwa 0,5 bis 1,0 m³/h, insbesondere im wesentlichen 0,7 m³/h, zugeführt.

In Abhängigkeit vom Durchmesser D der Mischstrecke 9 ist ein Gesamtstrom an Luft durch die Mischstrecke 9 von mindestens 20 m³/h, vorzugsweise mindestens 30 m³/h, insbesondere mindestens 35 m³/h erreichbar, wobei die Strömungsgeschwindigkeit vorzugsweise weniger als 25 m/s, insbesondere weniger als 20 m/s, bei dem aus der Gasstrahlpumpe 7 austretenden Luftstrom beträgt. Typischerweise ist unter den Randbedingungen der Messungen, also bei Umgebungstemperatur in der Anlage 1, ein Luftstrom mit einer Strömungsgeschwindigkeit von typischerweise 10 m/s am Austritt der Mischstrecke 9 festzustellen. Aus den erläuterten Gründen ändert sich dies jedoch bei Betriebstemperatur der Anlage 1.

Die Gasstrahlpumpe 7 weist vorzugsweise einen Volumenfaktor - also ein Verhältnis von gesamtem Volumenstrom der aus der Gasstrahlpumpe 7 strömenden Luft zu dem zugeführten Gebläseluftstrom - von mindestens 30, vorzugsweise mindestens 40 und insbesondere im wesentlichen 50 oder mehr auf.

Vorzugsweise sind die Gasstrahlpumpen 7 in einem Abstand von 5 cm bis 15 cm, vorzugsweise im wesentlichen 8 cm bis 10 cm, vom Glas 2 angeordnet. Insbesondere sind die Gasstrahlpumpen 7 oberhalb des Glases 2 und/oder zumindest im wesentlichen vertikal verlaufend angeordnet.

Für die normale Anordnung der Gasstrahlpumpen gilt angesichts der oszillierenden Bewegung des Glases auf der Fördereinrichtung, daß normalerweise eine im wesentlichen vertikal verlaufende Anordnung zweckmäßig ist. Bereichsweise kann aber auch eine geneigt verkaufende Anordnung zweckmäßig sein, beispielsweise eine Anordnung in einem Winkel von etwa 30 °C, beispielsweise im Bereich von Eintrittsöffnungen, Türen, etc..

Bei der bevorzugten Ausgestaltung wird ein großer Volumenstrom erzeugt, der von den Gasstrahlpumpen 7 ausgehend auf die Glasoberfläche trifft und in Form der Luftwirbel 8 wieder zur Eingangsseite der Gasstrahlpumpen 7 zurückgeführt wird. Dies führt zu einer besonders effizienten Wärmekopplung bzw. Konvektion zwischen dem auf das Glas 2 treffenden Luftstrom und dem Glas 2. Erfindungsgemäß wird durch Verwendung nicht vorgewärmter Gebläseluft die Strömungsgeschwindigkeit des Volumenstroms erhöht. Dies ist im vorliegenden Geschwindigkeitsbereich hinsichtlich der Wärmekopplung der Übertragung der Wärmemenge auf das Glas 2 wirkungsvoller als eine weitere Erhöhung des Volumenstroms.

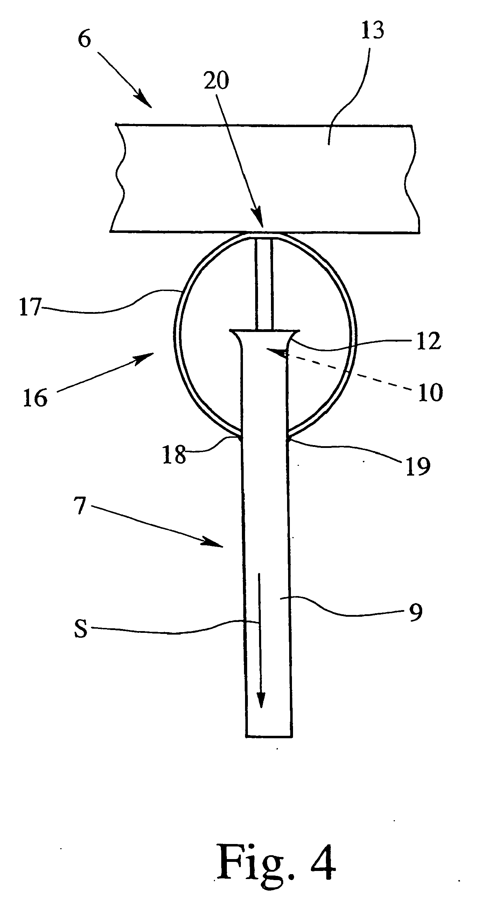

Die mechanische Verbindung der Gasstrahlpumpe 7 bzw. des die Mischstrecke 9 umgrenzenden Bauteils der Gasstrahlpumpe 7 mit der Leiteinrichtung 6 ist in den Fig. 1 bis 3 aus Vereinfachungsgründen weggelassen worden. Die Leiteinrichtung 6 weist beispielsweise entsprechende Leitungen und nicht dargestellte Ventile, Filter und dergleichen auf, um die Gebläseluft vom Gebläse 5 der Gasstrahlpumpe 7 über die Düsen 10 zuzuleiten. Vorzugsweise sind die Düsen 10 an Düsenbalken 13 angebracht, die insbesondere auch die Gasstrahlpumpen 7 über Verbindungsmittel halten. Insbesondere dient als Befestigung durchaus auch die Düse 10 selbst. Auf die noch folgenden Erläuterungen zu Fig. 4 darf verwiesen werden.

Die Anlage 1 weist ferner eine Fördereinrichtung 14 zur Förderung des Glases 2 auf. Insbesondere umfaßt die Fördereinrichtung 14 Rollen 15, insbesondere aus Keramik, zur Lagerung und Förderung des Glases 2, wie in Fig. 1 angedeutet.

Vorzugsweise wird das Glas 2 in der Anlage 1 oszillierend bewegt, also hin- und her bewegt, wie durch Pfeil F in Fig. 1 angedeutet. So wird vermieden, daß sich das heiße Glas 2 zwischen den Rollen 15 während der Behandlung in der Anlage 1 verformt.

Die Gasstrahlpumpen 7 sind vorzugsweise in Reihen quer zur Förderrichtung F angedeutet, wobei jede Reihe von einem zugeordneten Düsenbalken 13 der Leiteinrichtung 6 gehalten und mit Gebläseluft versorgt wird.

Die Reihen der Gasstrahlpumpen 7 bzw. die Düsenbalken 13 der Leiteinrichtung 6 verlaufen vorzugsweise quer zur Förderrichtung F des Glases 2 und/oder im wesentlichen horizontal.

Die Heizeinrichtungen 4 sind vorzugsweise als Widerstandsheizungen, als Heizstrahler oder als Gasbrenner ausgebildet.

Die Heizeinrichtungen 4 erstrecken sich vorzugsweise zumindest im wesentlichen parallel zu den Düsenbalken 13 und sind vorzugsweise versetzt zu diesen oder sogar zwischen diesen angeordnet.

Vorzugsweise ist die Anlage 1 derart ausgebildet, daß mehrere oder alle Luftwirbel 8 jeweils mindestens eine Heizeinrichtung 4 streifen oder umströmen. So wird ein besonders effektives Aufheizen der durch die Gasstrahlpumpen 7 strömenden Kammerluft bewirkt.

Die Luftwirbel 8 sind in Fig. 1 und 2 nur schematisch dargestellt. Insbesondere können sich auch mehrere übereinanderliegende, im Querschnitt beispielsweise im wesentlichen kreisförmige Luftwirbel 8 oder Wirbelwalzen bilden.

Bei der vorschlagsgemäßen Anlage 1 wird die Gebläseluft nicht vorgewärmt, da aufgrund der geringen Gebläseluftströme eine Vorwärmung nicht erforderlich ist. Auch wenn grundsätzlich eine Vorwärmung möglich ist, hat die vorwärmungsfreie Einblasung von Gebläseluft einen erheblichen Vorteil hinsichtlich der Förderung der Kammerluft. Wie bereits oben erläutert worden ist, ist für kalte Luft der Massenstrom deutlich höher als für vorgeheizte Gebläseluft, dadurch ergibt sich eine bessere Beschleunigung in den Gasstrahlpumpen 7.

Eingangs ist bereits etwas über die Schüsselbildung bei Beginn eines Aufwärmprozesses für ein plattenförmiges Glas 2 gesagt worden. Erfindungsgemäß empfiehlt sich eine Betriebsweise der Anlage 1, bei der bei noch kaltem Glas 2 in der Wärmekammer 3 den Gasstrahlpumpen 7 schnell viel Gebläseluft zugeführt wird. Dadurch ergibt sich sofort eine intensive Wärmekonvektion und Wärmeübertragung auf das Glas 2, so daß die anfänglich gefährliche, gefürchtete Schüsselbildung vermieden werden kann. Das gilt insbesondere bei E-Glas, dessen oberseitige Beschichtung ja eine Aufwärmung des Glases durch Wärmestrahlung erschwert. Während der ersten Aufheizphase des Glases 2 ist dann ein mittlerer Volumenstrom an Gebläseluft ausreichend. In der Endphase der Erwärmung des Glases sollte keine oder nur sehr wenig Gebläseluft zugeführt werden. Das Glas 2 ist jetzt so weich, daß andernfalls durch die Luftwirbel mitgeführte Staubpartikel auf der Oberfläche des Glases anhaften könnten. Optische Fehlstellen wären die Folge. Also läßt man in dieser Endphase der Erwärmung des Glases 2 eine Wirbelbildung besser weg. Das ist auch deshalb unproblematisch, weil der Strahlungsanteil bei dieser hohen Glastemperatur schon sehr gut geworden ist, also ein Temperaturausgleich im Glas 2 selbst stattfindet.

Die vorschlagsgemäße Anlage 1 und das vorschlagsgemäße Verfahren führen gegenüber dem Stand der Technik zu einer gleichmäßigeren Lufttemperatur über der Glasoberfläche, zu einer gleichmäßigeren Geschwindigkeit des Luftstroms über der Glasoberfläche, zu einer geringeren Abkühlung der Kammerluft (Ofenatmosphäre) und zu einer um ca. 80 % höheren mittleren Luftgeschwindigkeit am Glas und damit zu einer besseren Konvektion.

Schließlich darf auf eine bevorzugte Ausgestaltung der Befestigung der Gasstrahlpumpe 7 mit der Leiteinrichtung 6 im übrigen hingewiesen werden, die in Fig. 4 dargestellt ist. Mit "Leiteinrichtung 6 im übrigen" ist im vorliegenden Fall insbesondere der Düsenbalken 13 gemeint.

In bevorzugter Ausgestaltung ist zunächst die Düse 10 mit der Leiteinrichtung 6 über eine klemmende Verbindung, vorzugsweise über eine Schraubverbindung, verbunden. Dies hat nicht nur fertigungstechnische Vorteile, sondern führt zu einer besonders einfachen mechanischen Verbindung 16 zwischen der Gasstrahlpumpe 7 und der Leiteinrichtung 6 im übrigen, wie im folgenden gezeigt wird.

Zunächst ist von Bedeutung, daß diese mechanische Verbindung 16 vorzugsweise derart ausgestaltet ist, daß bei Temperaturschwankungen und den resultierenden Materialausdehnungen die Zentrierung der Düse 10 in der zugeordneten Mischstrecke 9 unbeeinflußt bleibt. Eine Beschränkung dieser Zentrierung würde nämlich zu ungewünschten Turbulenzen in dem zwischen der Düse 10 und der Mischstrecke 9 liegenden Bereich führen.

Die obige Anforderung an die mechanische Verbindung 16 erfüllt die in Fig. 4 dargestellte Ausfiihrungsform. Hier ist die mechanische Verbindung 16 als Ringabschnitt 17 mit zwei Ringabschnittsenden 18, 19 ausgestaltet, wobei die beiden Ringabschnittsenden 18, 19 mit der Gasstrahlpumpe 7 verbunden sind. Für diese Verbindung ist vorzugsweise eine Schweißverbindung vorgesehen, es sind auch Alternativen denkbar. Die Leiteinrichtung 6 im übrigen, hier also der Düsenbalken 13, ist zwischen den beiden Ringabschnittsenden 18, 19 mit dem Ringabschnitt 17 verbunden. Hier handelt es sich vorzugsweise um eine Klemmverbindung.

Fig. 4 läßt sich entnehmen, daß unter anderem durch den symmetrischen Aufbau der mechanischen Verbindung 16 eine temperaturbedingte Materialausdehnung allenfalls zu einer Verlagerung der Düse 10 in Fig. 8 nach oben oder nach unten führen kann.

Ferner ist die mechanische Verbindung 16 so geformt, daß eine ungewünschte Beeinflussung der Strömung kaum spürbar ist. Dabei wird der Ringabschnitt 17 so schmal wie möglich ausgelegt. In bevorzugter Ausgestaltung weist der Ringabschnitt 17 eine Breite von etwa 10 mm auf.

Besonders interessant ist nun die Verbindung des Ringabschnitts 17 und damit der Gasstrahlpumpe 7 mit der Leiteinrichtung 6 im übrigen, hier also mit dem Düsenbalken 13. Der Ringabschnitt 17 ist nämlich mittels der Schraubverbindung zwischen der Düse 10 und der Leiteinrichtung 6 klemmend befestigt. Hierfür weist der Ringabschnitt 17 eine Bohrung 20 auf, durch die jedenfalls ein Bestandteil der Düse 10, hier also das Gewinde der Düse 10, hindurchführbar ist. Dies führt wiederum zu einer besonders kostensparenden Fertigung sowie zu einem kompakten Aufbau.

## Patentansprüche

1. Anlage (1) zur Wärmebehandlung von Glas (2) oder anderen Werkstoffen, insbesondere Vorspannanlage oder Temperofen, mit einer Wärmekammer (3), mindestens einer Heizeinrichtung (4) zur Strahlungsheizung, einem Gebläse (5) und einer Leiteinrichtung (6) zur Zuleitung von Gebläsegas, wobei die Leiteinrichtung (6) mehrere Gasstrahlpumpen (7), denen eingangsseitig Gebläsegas zuführbar ist, zur Erzeugung von Luftwirbeln (8) in der Wärmekammer (3) aufweist, um das Glas (2) zusätzlich durch verstärkte Konvektion zu erwärmen, und wobei als Gas ein beliebiges Gas, insbesondere Luft, oder ein Gasgemisch, insbesondere ein Luft-/Gas-Gemisch, verwendbar ist,
**dadurch gekennzeichnet,**
**daß** die Gasstrahlpumpen (7) zur Förderung von Kammerluft durch einströmendes Gebläsegas und zur Vermischung von Kammerluft und Gebläsegas jeweils eine Mischstrecke (9) mit konstantem lichtem Durchmesser (D) oder Querschnitt aufweisen,
wobei keine Vorwärmung des Gebläsegases erfolgt.

2. Anlage nach Anspruch 1, **dadurch gekennzeichnet, daß** der gesamte Volumenstrom der aus jeder Gasstrahlpumpe (7) strömenden Luft, gemessen bei Umgebungstemperatur in der Anlage (1), um einen Volumenfaktor von mindestens 30 größer als der Volumenstrom der der Gasstrahlpumpe (7) zugeführten Gebläseluft ist, insbesondere, daß der Volumenfaktor mindestens 40, insbesondere im wesentlichen 50 oder mehr, beträgt.

3. Anlage nach Anspruch 1 oder 2, **dadurch gekennzeichnet, daß** die Gasstrahlpumpen (7) oder deren Mischstrecken (9) im wesentlichen hohlzylindrisch ausgebildet sind.

4. Anlage nach einem der voranstehenden Ansprüche, **dadurch gekennzeichnet, daß** die Gasstrahlpumpen (7) oder deren Mischstrecken (9) ein Verhältnis von Länge (L) zu lichtem Durchmesser (D) von mindestens 4, vorzugsweise mindestens 5, insbesondere im wesentlichen von 8, und/oder von höchstens 20, vorzugsweise weniger als 15, insbesondere weniger als 10, aufweisen.

5. Anlage nach einem der voranstehenden Ansprüche, **dadurch gekennzeichnet, daß** die Gasstrahlpumpen (7) oder deren Mischstrecken (9) eine Länge (L) von mindestens 15 cm, vorzugsweise mindestens 18 cm, insbesondere im wesentlichen 20 cm oder mehr, aufweisen.

6. Anlage nach einem der voranstehenden Ansprüche, **dadurch gekennzeichnet, daß** die Gasstrahlpumpen (7) oder deren Mischstrecken (9) einen lichten Durchmesser (D) von mindestens 10 mm, vorzugsweise mindestens 20 mm, insbesondere im wesentlichen 25 mm oder mehr, aufweisen.

7. Anlage nach einem der voranstehenden Ansprüche, **dadurch gekennzeichnet, daß** der Volumenstrom an zugeführter Gebläseluft pro Gasstrahlpumpe (7), gemessen bei Umgebungstemperatur in der Anlage (1), höchstens 2 m³/h, vorzugsweise weniger als 1,5 m³/h, insbesondere im wesentlichen 1,0 m³/h oder weniger, beträgt.

8. Anlage nach einem der voranstehenden Ansprüche, **dadurch gekennzeichnet, daß** der gesamte Volumenstrom der aus jeder Gasstrahlpumpe (7) strömenden Luft mindestens 20 m³/h, vorzugsweise mindestens 30 m³/h, insbesondere im wesentlichen 35 m³/h oder mehr, beträgt.

9. Anlage nach einem der voranstehenden Ansprüche, **dadurch gekennzeichnet, daß** die Gebläseluft jeder Gasstrahlpumpe (7) in Durchströmrichtung und/oder zentrisch zuführbar ist.

10. Anlage nach einem der voranstehenden Ansprüche, **dadurch gekennzeichnet, daß** jeder Gasstrahlpumpe (7) eingangsseitig eine Düse (10) zur Zuführung von Gebläseluft zugeordnet ist.

11. Anlage nach Anspruch 10, **dadurch gekennzeichnet, daß** die Düse (10) zentrisch in der zugeordneten Mischstrecke (9) angeordnet ist und/oder in diese hineinragt.

12. Anlage nach Anspruch 10 oder 11, **dadurch gekennzeichnet, daß** die Düse (10) eine Öffnung (11) mit einem Durchmesser (DD) von höchstens 2 mm, vorzugsweise etwa 1 mm, aufweist.

13. Anlage nach einem der Ansprüche 10 bis 12, **dadurch gekennzeichnet, daß** die Düse (10) eine Öffnung (11) mit einer Länge (DL) von 1 bis 12 mm, vorzugsweise etwa 3 bis 5 mm, aufweist.

14. Anlage nach einem der Ansprüche 10 bis 13, **dadurch gekennzeichnet, daß** das Verhältnis DL/DD zwischen etwa 3 und etwa 5, vorzugsweise bei etwa 5, liegt.

15. Anlage nach einem der voranstehenden Ansprüche, **dadurch gekennzeichnet, daß** die Gasstrahlpumpen (7) jeweils einen Konfusor (12) aufweisen, insbesondere mit einem Verhältnis von Einlaßdurchmesser zu Auslaßdurchmesser kleiner 1,5 und/oder insbesondere mit einer Länge, die höchstens 5%, vorzugsweise höchstens 4%, insbesondere im wesentlichen 3% oder weniger, der Länge (L) der nachgeordneten Mischstrecke (9) beträgt.

16. Anlage nach den Ansprüchen 11 und 15, **dadurch gekennzeichnet, daß** die Austrittsöffnung der Düse (10), gemessen bei Umgebungstemperatur in der Anlage (1), etwa in Höhe des Übergangs von der Mischstrecke (9) auf den Konfuser (12) liegt.

17. Anlage nach einem der voranstehenden Ansprüche, **dadurch gekennzeichnet, daß** die Gasstrahlpumpen (7) diffusorfrei ausgebildet sind.

18. Anlage nach einem der voranstehenden Ansprüche, **dadurch gekennzeichnet, daß** die Gasstrahlpumpen (7) in einem Abstand von 5 bis 15 cm, vorzugsweise etwa 8 bis 10 cm, vom Glas (2), vorzugsweise oberhalb, endend angeordnet sind.

19. Anlage nach einem der voranstehenden Ansprüche, **dadurch gekennzeichnet, daß** die Gasstrahlpumpen (7) oder deren Mischstrecken (9) zumindest im wesentlichen vertikal verlaufend angeordnet sind.

20. Anlage nach einem der voranstehenden Ansprüche, **dadurch gekennzeichnet, daß** die Gasstrahlpumpen (7) reihenförmig an insbesondere quer zur Förderrichtung (F) des Glases (2) verlaufenden Düsenbalken (13) der Leiteinrichtung (6) angeordnet sind.

21. Anlage nach einem der voranstehenden Ansprüche, **dadurch gekennzeichnet, daß** sich mehrere Heizeinrichtungen (4) parallel zu den Gasstrahlpumpen (7) tragenden Düsenbalken (13) der Leiteinrichtung (6) und/oder oberhalb der Gasstrahlpumpen (7) und seitlich versetzt zu oder zwischen diesen erstrecken.

22. Anlage nach Anspruch 10 und ggf. nach einem der Ansprüche 11 bis 21, **dadurch gekennzeichnet, daß** die Düse (10) mit der Leiteinrichtung (6) über eine Schraubverbindung verbunden ist.

23. Anlage nach einem der voranstehenden Ansprüche, **dadurch gekennzeichnet, daß** eine mechanische Verbindung (16) zwischen der Gasstrahlpumpe (7) und der Leiteinrichtung (6) im übrigen vorgesehen ist und daß die mechanische Verbindung (16) vorzugsweise derart ausgestaltet ist, daß bei Temperaturschwankungen und den resultierenden Materialausdehnungen die Zentrierung der Düse (10) in der zugeordneten Mischstrecke (9) unbeeinflußt bleibt.

24. Anlage nach Anspruch 23, **dadurch gekennzeichnet, daß** die mechanische Verbindung (16) zwischen der Gasstrahlpumpe (7) und der Leiteinrichtung (6) im übrigen einen Ringabschnitt (17) mit zwei Ringabschnittsenden (18, 19) aufweist, daß die beiden Ringabschnittsenden (18, 19) mit der Gasstrahlpumpe (7), vorzugsweise über eine Schweißverbindung, verbunden sind und daß die Leiteinrichtung (6) im übrigen zwischen den beiden Ringabschnittsenden (18, 19), vorzugsweise klemmend, mit dem Ringabschnitt (17) verbunden ist.

25. Anlage nach den Ansprüchen 22 und 24, **dadurch gekennzeichnet, daß** für die klemmende Verbindung zwischen der Leiteinrichtung (6) im übrigen und dem Ringabschnitt (17) der Ringabschnitt (17) eine Bohrung (20) aufweist, durch die jedenfalls ein Bestandteil der Düse (10), vorzugsweise das Gewinde der Düse (10), hindurchführbar ist.

26. Anlage nach einem der Ansprüche 1 bis 25, **dadurch gekennzeichnet, daß** die Anlage (1) derart ausgebildet ist, daß mehrere oder alle Luftwirbel (8) jeweils mindestens eine Heizeinrichtung (4) streifen oder umströmen.

27. Anlage nach einem der voranstehenden Ansprüche, **dadurch gekennzeichnet, daß** die Heizeinrichtung (4) als Widerstandsheizung und/oder als Heizstrahler und/oder als Gasbrenner ausgebildet ist.

28. Anlage nach einem der voranstehenden Ansprüche, **dadurch gekennzeichnet, daß** die Anlage (1) eine Fördereinrichtung (14) zur vorzugsweise oszillierenden Förderung des Glases (2) in Förderrichtung aufweist.

29. Anlage nach Anspruch 28, **dadurch gekennzeichnet, daß** die Fördereinrichtung (14) mehrere Rollen (15), insbesondere aus Keramik, zum Tragen des Glases (2) aufweist.

30. Verfahren zur Wärmebehandlung von Glas (2) oder anderen Werkstoffen in einer beheizten Wärmekammer (3), wobei eine Anlage zur Wärmebehandlung gemäß einem der Ansprüche 1 bis 29 verwendet wird,
**dadurch gekennzeichnet,**
**daß** anfangs bei noch kaltem Glas (2) in der Wärmekammer (3) den Gasstrahlpumpen (7) schnell viel Gebläseluft zugeführt wird, während der ersten Aufheizphase des Glases (2) ein mittlerer Volumenstrom an Gebläseluft zugeführt wird und in der Endphase der Erwärmung des Glases (2) keine oder nur sehr wenig Gebläseluft zugeführt wird.

## Claims

1. System (1) for the thermal treatment of glass (2) or other materials, in particular a pretensioning system or tempering oven, having a thermal chamber (3), at least one heating device (4) for radiative heating, a blower (5) and a guide device (6) for delivering blower gas, the guide device (6) comprising a plurality of gas jet pumps (7) which can be supplied with blower gas on the input side for generating air vortices (8) in the thermal chamber (3) in order to heat the glass (2) additionally by enhanced convection, and an arbitrary gas especially air, or a gas mixture especially an air/gas mixture, being usable as the gas, **characterized in that** for passing chamber air through inflowing blower gas and for mixing chamber air and blower gas, the gas jet pumps (7) respectively comprise a mixing section (9) with a constant internal diameter (D) or cross section, no preheating of the blower gas taking place.

2. System according to Claim 1, **characterized in that** the total volume flow of the air flowing from each gas jet pump (7), measured at ambient temperature in the system (1), is greater by a volume factor of at least 30 than the volume flow of the blower air fed to the gas jet pump (7), particularly **in that** the volume factor is at least 40, in particular essentially 50 or more.

3. System according to Claim 1 or 2, **characterized in that** the gas jet pumps (7) or their mixing sections (9) are essentially designed as hollow cylinders.

4. System according to one of the preceding claims, **characterized in that** the gas jet pumps (7) or their mixing sections (9) have a ratio of length (L) to internal diameter (D) of at least 4, preferably at least 5, in particular essentially 8, and/or at most 20, preferably less than 15, in particular less than 10.

5. System according to one of the preceding claims, **characterized in that** the gas jet pumps (7) or their mixing sections (9) have a length (L) of at least 15 cm, preferably at least 18 cm, in particular essentially 20 cm or more.

6. System according to one of the preceding claims, **characterized in that** the gas jet pumps (7) or their mixing sections (9) have an internal diameter (D) of at least 10 mm, preferably at least 20 mm, in particular essentially 25 mm or more.

7. System according to one of the preceding claims, **characterized in that** the volume flow of blower air supplied per gas jet pump (7), measured at ambient temperature in the system (1), is at most 2 m³/h, preferably less than 1.5 m³/h, in particular essentially 1.0 m³/h or less.

8. System according to one of the preceding claims, **characterized in that** the total volume flow of the air flowing from each gas jet pump (7) is at least 20 m³/h, preferably at least 30 m³/h, in particular essentially 35 m³/h or more.

9. System according to one of the preceding claims, **characterized in that** the blower air can be supplied to each gas jet pump (7) in the through-flow direction and/or centrally.

10. System according to one of the preceding claims, **characterized in that** each gas jet pump (7) is assigned a nozzle (10) on the input side for supplying blower air.

11. System according to Claim 10, **characterized in that** the nozzle (10) is arranged centrally in the assigned mixing section (9) and/or protrudes into it.

12. System according to Claim 10 or 11, **characterized in that** the nozzle (10) has an opening (11) with a diameter (DD) of at most 2 mm, preferably approximately 1 mm.

13. System according to one of Claims 10 to 12, **characterized in that** the nozzle (10) has an opening (11) with a length (DL) of from 1 to 12 mm, preferably approximately 3 to 5 mm.

14. System according to one of Claims 10 to 13, **characterized in that** the ratio DL/DD lies between approximately 3 and approximately 5, and preferably is approximately 5.

15. System according to one of the preceding claims, **characterized in that** the gas jet pumps (7) respectively comprise a confusor (12), in particular with a ratio of inlet diameter to outlet diameter of less than 1.5 and/or in particular with a length which is at most 5%, preferably at most 4%, in particular essentially 3% or less of the length (L) of the downstream mixing section (9).

16. System according to Claims 11 and 15, **characterized in that** the outlet opening of the nozzle (10), measured at an ambient temperature in the system (1), lies approximately level with the transition from the mixing section (9) to the confusor (12).

17. System according to one of the preceding claims, **characterized in that** the gas jet pumps (7) are designed diffusor-free.

18. System according to one of the preceding claims, **characterized in that** the gas jet pumps (7) are arranged ending at a distance of 5 to 15 cm, preferably approximately 8 to 10 cm from the glass (2), preferably above.

19. System according to one of the preceding claims, **characterized in that** the gas jet pumps (7) or their mixing sections (9) are arranged at least essentially extending vertically.

20. System according to one of the preceding claims, **characterized in that** the gas jet pumps (7) are arranged in a row on nozzle bars (13) of the guide device (6) which, in particular, extend transversely to the delivery direction (F) of the glass (2).

21. System according to one of the preceding claims, **characterized in that** a plurality of heating devices (4) extend parallel to nozzle bars (13) of the guide device (6) which carry the gas jet pumps (7) and/or above the gas jet pumps (7) and laterally offset from them or between them.

22. System according to Claim 10 and optionally according to one of Claims 11 to 21, **characterised in that** the nozzle (10) is connected to the guide device (6) via a screw connection.

23. System according to one of the preceding claims, **characterized in that** a mechanical connection (16) is moreover provided between the gas jet pump (7) and the guide device (6), and **in that** the mechanical connection (16) is preferably configured so that the centring of the nozzle (10) in the associated mixing section (9) remains unaffected by temperature variations and the resulting material expansions.

24. System according to Claim 23, **characterized in that** the mechanical connection (16) between the gas jet pump (7) and the guide device (6) moreover comprises a ring section (17) with two ring section ends (18, 19), **in that** the two ring section ends (18, 19) are connected to the gas jet pump (7) preferably via a welded connection, and **in that** the guide device (6) is moreover connected to the ring section (17) in-between the two ring section ends (18, 19), preferably in a clamping fashion.

25. System according to Claims 22 and 24, **characterized in that** for the clamping connection between the guide device (6) and the ring section (17), the ring section (17) moreover comprises a bore (20) through which in any event a component of the nozzle (10) can be fed, preferably the screw thread of the nozzle (10).

26. System according to one of Claims 1 to 25, **characterized in that** the system (1) is designed so that a plurality or all of the air vortices (8) respectively graze or flow around a heating device (4).

27. System according to one of the preceding claims, **characterized in that** the heating device (4) is designed as a resistive heater and/or as a heating radiator and/or as a gas burner.

28. System according to one of the preceding claims, **characterized in that** the system (1) comprises a delivery device (14) for preferably oscillating delivery of the glass (2) in a delivery direction.

29. System according to Claim 28, **characterized in that** the delivery device (14) comprises a plurality of rollers (15), in particular made of ceramic, for carrying the glass (2).

30. Method for the heat treatment of glass (2) or other materials in a heated thermal chamber (3), a thermal treatment system according to one of Claims 1 to 29 being used,
**characterized in that** a large amount of blower air is initially supplied rapidly to the gas jet pumps (7) with glass (2) still cold in the thermal chamber (3), a medium volume flow of blower air is supplied during the first heating phase of the glass (2) and no blower air, or only very little blower air, is supplied in the end phase of heating the glass (2).

## Revendications

1. Installation (1) de traitement thermique de verre (2) ou d'autres matériaux, en particulier installation de précontrainte ou four de mise à température, qui présente une chambre de chauffage (3), au moins un dispositif de chauffage (4) qui assure un chauffage radiant, un ventilateur (5) et un dispositif (6) d'amenée de gaz de ventilation, le dispositif d'amenée (6) présentant plusieurs pompes (7) à jet de gaz à l'entrée desquelles du gaz de ventilation peut être amené pour créer des tourbillons d'air (8) dans la chambre de chauffage (3) et chauffer encore le verre (2) par une convection renforcée, et dans laquelle on peut utiliser comme gaz un gaz quelconque, en particulier de l'air ou un mélange de gaz, en particulier un mélange d'air et de gaz,
**caractérisée en ce que** les pompes (7) à jet de gaz qui servent à transporter l'air de la chambre par le gaz de ventilation entrant et à mélanger l'air de la chambre et le gaz de ventilation présentent toutes un parcours de mélange (9) dont le diamètre intérieur (D) ou la section transversale intérieure sont constants, le gaz de ventilation n'étant pas préchauffé.

2. Installation selon la revendication 1, **caractérisée en ce que** l'ensemble du débit volumique de l'air qui est éjecté par chaque pompe (7) à jet de gaz, mesuré à la température ambiante dans l'installation (1), est plus grand d'un facteur d'au moins 30 que l'écoulement volumique de l'air de ventilation apportée à la pompe (7) à jet de gaz et en particulier **en ce que** ce facteur volumique est d'au moins 40 et en particulier essentiellement de 50 ou plus.

3. Installation selon les revendications 1 ou 2, **caractérisée en ce que** les pompes (7) à jet de gaz ou leurs parcours de mélange (9) ont essentiellement la forme de cylindres creux.

4. Installation selon l'une des revendications précédentes, **caractérisée en ce que** les pompes (7) à jet de gaz ou leur parcours de mélange (9) présentent entre leur longueur (L) et leur diamètre intérieur (D) un rapport d'au moins 4, de préférence d'au moins 5, en particulier d'essentiellement 8 et/ou d'au plus 20, de préférence de moins de 15 et en particulier de moins de 10.

5. Installation selon l'une des revendications précédentes, **caractérisée en ce que** les pompes (7) à jet de gaz ou leur parcours de mélange (9) ont une longueur (L) d'au moins 15 cm, de préférence d'au moins 18 cm et en particulier d'essentiellement 20 cm ou plus.

6. Installation selon l'une des revendications précédentes, **caractérisée en ce que** les pompes (7) à jet de gaz ou leur parcours de mélange (9) ont un diamètre intérieur (D) d'au moins 10 mm, de préférence d'au moins 20 mm et en particulier d'essentiellement 25 mm ou plus.

7. Installation selon l'une des revendications précédentes, **caractérisée en ce que** le débit volumique d'air de ventilation apporté à chaque pompe (7) à jet de gaz, mesuré à la température ambiante dans l'installation (1), est d'au plus 2 m³/h, de préférence de moins de 1,5 m³/h et en particulier d'essentiellement 1,0 m³/h ou moins.

8. Installation selon l'une des revendications précédentes, **caractérisée en ce que** la totalité du débit volumique de l'air expulsé de chaque pompe (7) à jet de gaz est d'au moins 20 m³/h, de préférence d'au moins 30 m³/h et en particulier d'essentiellement 35 m³/h ou plus.

9. Installation selon l'une des revendications précédentes, **caractérisée en ce que** l'air de ventilation peut être amené à chaque pompe (7) à jet de gaz dans la direction du balayage et/ou en son centre.

10. Installation selon l'une des revendications précédentes, **caractérisée en ce qu'**un ajutage (10) d'amenée d'air de ventilation est associé à l'entrée de chaque pompe (7) à jet de gaz.

11. Installation selon la revendication 10, **caractérisée en ce que** l'ajutage (10) est disposé au centre du parcours de mélange (9) associé et/ou pénètre dans ce dernier.

12. Installation selon les revendications 10 ou 11, **caractérisée en ce que** l'ajutage (10) présente une ouverture (11) dont le diamètre (DD) est de plus 2 mm et de préférence d'environ 1 mm.

13. Installation selon l'une des revendications 10 à 12, **caractérisée en ce que** l'ajutage (10) présente une ouverture (11) dont la longueur (DL) est de 1 à 12 mm et de préférence d'environ 3 à 5 mm.

14. Installation selon l'une des revendications 10 à 13, **caractérisée en ce que** le rapport DL/DD est situé entre environ 3 et environ 5 et est de préférence d'environ 5.

15. Installation selon l'une des revendications précédentes, **caractérisée en ce que** les pompes (7) à jet de gaz présentent toutes un concentrateur (12) qui présente entre son diamètre d'entrée et son diamètre de sortie un rapport inférieur à 1,5 et dont la longueur représente en particulier au plus 5 %, de préférence au plus 4 % et en particulier essentiellement 3 % ou moins de la longueur (L) du parcours de mélange (9) situé en aval.

16. Installation selon les revendications 11 et 15, **caractérisée en ce que** l'ouverture de sortie de l'ajutage (10), mesurée à la température qui règne dans l'installation (1), est située essentiellement à la hauteur de la transition entre le parcours de mélange (9) et le concentrateur (12).

17. Installation selon l'une des revendications précédentes, **caractérisée en ce que** les pompes (7) à jet de gaz sont réalisées sans diffuseur.

18. Installation selon l'une des revendications précédentes, **caractérisée en ce que** les pompes à jet de gaz (7) se terminent à une distance de 5 à 15 cm et de préférence d'environ 8 à 10 cm du verre (2) et sont de préférence disposées au-dessus du verre.

19. Installation selon l'une des revendications précédentes, **caractérisée en ce que** les pompes (7) à jet de gaz ou leur parcours des mélange (9) sont disposés de manière à s'étendre essentiellement à la verticale.

20. Installation selon l'une des revendications précédentes, **caractérisée en ce que** les pompes (7) à jet de gaz sont disposées en série sur des lignes (13) d'ajutage du dispositif d'amenée (6) qui s'étendent en particulier transversalement par rapport à la direction d'avancement (F) du verre (2).

21. Installation selon l'une des revendications précédentes, **caractérisée en ce que** plusieurs dispositifs de chauffage (4) sont décalés latéralement par rapport aux lignes d'ajutage (13) qui portent les pompes (7) à jet de gaz du dispositif d'amenée (6) et/ou au-dessus des pompes (7) à jet de gaz ou s'étendent entre ces dernières.

22. Installation selon la revendication 10 et éventuellement selon l'une des revendications 11 à 21, **caractérisée en ce que** l'ajutage (10) est relié au dispositif d'amenée (6) par une liaison filetée.

23. Installation selon l'une des revendications précédentes, **caractérisée en ce qu'**une liaison mécanique (16) entre la pompe (7) à jet de gaz et le dispositif d'amenée (6) est par ailleurs prévue et **en ce que** la liaison mécanique (16) est configurée de préférence de telle sorte que le centrage de l'ajutage (10) dans le parcours de mélange (9) associé ne soit pas influencé par des variations de températures et les dilatations du matériau qui en résulte.

24. Installation selon la revendication 23, **caractérisée en ce que** la liaison mécanique (16) entre la pompe (7) à jet de gaz du dispositif d'amenée (6) présente par ailleurs une partie annulaire (17) dotée de deux extrémités (18, 19) de partie annulaire, **en ce que** les deux extrémités (18, 19) de partie annulaire sont reliées à la pompe (7) à jet de gaz, de préférence par une liaison soudée et **en ce que** le dispositif d'amenée (6) est par ailleurs relié à la partie annulaire (17) entre les deux extrémités (18, 19) de la partie annulaire, de préférence par serrage.

25. Installation selon les revendications 22 et 24, **caractérisée en ce que**, pour la liaison serrée entre le dispositif d'amenée (6) et la partie annulaire (17), la partie annulaire (17) présente par ailleurs un alésage (20) qui peut être traversé en tout cas par un composant de l'ajutage (10) et de préférence par le filet de l'ajutage (10).

26. Installation selon l'une des revendications 1 à 25, **caractérisée en ce que** l'installation (1) est configurée de telle sorte que plusieurs ou tous les tourbillons d'air (8) balayent ou englobent chacun au moins un dispositif de chauffage (4).

27. Installation selon l'une des revendications précédentes, **caractérisée en ce que** le dispositif de chauffage (4) est configuré comme chauffage à résistance et/ou comme chauffage radiant et/ou comme brûleur à gaz.

28. Installation selon l'une des revendications précédentes, **caractérisée en ce que** l'installation (1) présente un dispositif de transport (14) qui permet de transporter le verre (2) dans la direction du transport, de préférence de manière oscillante.

29. Installation selon la revendication 28, **caractérisée en ce que** le dispositif de transport (14) présente plusieurs galets (15), en particulier en céramique, pour soutenir le verre (2).

30. Procédé de traitement thermique de verre (2) ou d'autres matériaux dans une chambre de chauffage chauffée (3), dans lequel on utilise une installation de traitement thermique selon l'une des revendications 1 à 29,
**caractérisé en ce qu'**initialement, une grande quantité d'air de ventilation est amenée rapidement dans les pompes (7) à jet de gaz lorsque le verre (2) est encore froid dans la chambre de chauffage (3), **en ce que** lors de la première phase de chauffage du verre (2), un écoulement volumique moyen d'air de ventilation est apporté et **en ce que** dans la phase finale du chauffage du verre (2), on n'apporte pas ou on n'apporte que très peu d'air de ventilation.
